# EUROPEAN PATENT SPECIFICATION

(11) **EP 4 477 869 B1**
(45) Date of publication and mention of the grant of the patent: **28.01.2026**
(21) Application number: 23178616.1
(22) Date of filing: 12.06.2023
(51) Int. Cl.: F03D 1/06, F03D 13/30, F03D 80/50

(54) **A METHOD FOR MANIPULATING A SHAPE AND/OR A POSITION OF A WIND TURBINE ROTOR BLADE SHELL MEMBER**
VERFAHREN ZUR MANIPULATION EINER FORM UND/ODER EINER POSITION EINES WINDTURBINENROTORBLATTSCHALENELEMENTS
PROCÉDÉ DE MANIPULATION D'UNE FORME ET/OU D'UNE POSITION D'UN ÉLÉMENT DE COQUE DE PALE DE ROTOR D'ÉOLIENNE

(43) Date of publication of application: 18.12.2024
(73) Proprietor: Nordex Energy SE & Co. KG, 22419 Hamburg (DE)
(72) Inventor: Beleites, Kalle, 22419 Hamburg (DE)
(74) Representative: Hauck Patent- und Rechtsanwälte PartmbB

(56) References cited:
- EP-A1- 2 617 990
- EP-A1- 2 674 612
- US-A1- 2014 377 072
- US-A1- 2014 377 078

## Description

The invention relates to a method for manipulating a shape and/or a position of a first wind turbine rotor blade shell member.

Over the last decades, wind turbine rotor blades have continued to grow in size, making it more difficult to handle the wind turbine rotor blades and wind turbine rotor blade elements during production and transport. Whenever it becomes necessary to bring or maintain a wind turbine rotor blade shell member exactly in a desired position and/or shape, this may require applying substantial forces, which is difficult due to the complex shape of the wind turbine rotor blade shell members, and always includes a risk to damage the wind turbine rotor blade shell member's structure.

This is particularly true when trying to repair a wind turbine rotor blade initially assembled with non-perfect alignment of its wind turbine rotor blade shell members, in particular half shells, sometimes referred to as a wind turbine rotor blade having an "overbite." Although such production faults are rare, it is highly desirable to find a suitable way to repair such wind turbine rotor blades, because in the alternative, one may have to discard the entire wind turbine rotor blade.

Another issue that may arise in particular for large wind turbine rotor blades that undergo extended periods of storage is a slight deviation of their desired shape often referred to as "ovalization". Wind turbine rotor blades deviating from their desired, e.g. circular shape may cause problems when mounting the wind turbine rotor blade to a hub, or when in operation. For example, a pitch bearing may experience excessive wear.

Document US 2014/377072 A1 discloses a prior art example of a method of manipulating a shape of a wind turbine blade.

Departing therefrom, it is an object of the invention to provide a method for manipulating a shape and/or a position of a wind turbine rotor blade shell member.

This object is solved by the method of claim 1. Advantageous aspects are given in the dependent claims.

The method is for manipulating a shape and/or a position of a first wind turbine rotor blade shell member, wherein the first wind turbine rotor blade shell member has a connection section and a first insert having a connection surface and being arranged in the connection section, the first insert being adapted to be screw-connected to another element of a wind turbine rotor, the method comprising the following steps:
- providing a first tensioning block having a contact surface,
- mounting the first tensioning block to the first wind turbine rotor blade shell member with a threaded bolt which is screwed into the first insert and pretensioned such that the contact surface of the first tensioning block is pressed against the connection surface of the first insert with a pretensioning force,
- applying a lateral manipulating force to the first tensioning block,
- wherein the pretensioning force is selected such that between the connection surface of the first insert and the contact surface of the first tensioning block, an interference fit is obtained strong enough to transfer the lateral manipulating force to the first wind turbine rotor blade shell member.

The wind turbine rotor may have a horizontal axis. The first wind turbine rotor blade shell member may be a wind turbine rotor blade half shell or another element of a wind turbine rotor blade comprising two or more parts connected with each other to form the entire rotor blade shell. However, the first wind turbine rotor blade shell member may also refer to a wind turbine rotor blade shell in its entirety, either when manufactured in one piece or when having been firmly assembled from two or more parts manufactured separately. The first wind turbine rotor blade shell member may extend over the entire length of the wind turbine rotor blade, from a root to a tip.

However, the first wind turbine rotor blade shell member may also be a longitudinal segment of a wind turbine rotor blade shell member or of an entire wind turbine rotor blade shell.

The term "connection section" refers to a section of the first wind turbine rotor blade shell member adapted to be connected to another element of a wind turbine rotor. This other element may be, for example, a wind turbine rotor hub or an extender placed between a wind turbine rotor blade root and a wind turbine rotor hub. The other element may also be another element of a wind turbine rotor blade, in particular when the wind turbine rotor blade is assembled from two or more longitudinal segments. In this case, the connection section may be an end section of a first longitudinal segment of a rotor blade shell member facing another longitudinal segment of the same wind turbine rotor blade shell member. No matter to which other element of a wind turbine rotor the first wind turbine rotor blade shell member is to be connected to, the connection surface of the first insert, which is arranged in the connection section, will be facing the other element of the wind turbine rotor.

The first insert has an inner thread into which the threaded bolt can be screwed into. In particular, the first insert may be a sleeve having a circular, circumferential outer surface. However, this is not mandatory, the first insert may also have another cross-sectional shape. The cross-sectional shape may vary or may be constant along a longitudinal direction of the first insert. The first insert may be rotationally symmetrical. In particular, the first insert may be made of a metal such as steel.

In accordance with the invention, a first tensioning block is provided and mounted to the first wind turbine rotor blade shell member. As will be discussed later, the first tensioning block need not to be block-shaped, in fact it may have any other shape as long as the same provides a contact surface suitable to be pressed against the connection surface of the first insert when the first tensioning block is mounted to the first wind turbine rotor blade shell member by means of the threaded bolt. The first tensioning block is mounted to the first wind turbine rotor blade shell member with a threaded bolt which is screwed into the first insert. The outer end or section of the threaded bolt not screwed into the first insert is connected to (or formed integrally with) the first tensioning block.

When prestressing the threaded bolt, the contact surface of the first tensioning block is pressed against the connection surface of the first insert with a pretensioning force. After having mounted the first tensioning block in this manner, it is firmly attached to the first wind turbine rotor blade shell member, and between the connection surface of the first insert and the contact surface of the first tensioning block, an interference fit is obtained. The strength of the interference fit depends on the pretensioning force. The pretensioning force is selected such that the interference fit is strong enough to transfer the lateral manipulating force applied to the first tensioning block. Applying a force to the first tensioning block in a lateral direction means in a direction at an angle with reference to a longitudinal axis of the first insert and/or its inner thread. The angle may be essentially a right angle, however, any manipulating forces deviating therefrom by 60° or less, in particular by 30° or less, may be considered lateral as well.

An important advantage of the inventive method is that the lateral manipulating force is transferred to the first wind turbine rotor blade shell member through the interference fit between the connection surface of the first insert and the contact surface of the first tensioning block. This eliminates a risk to cause any structural damage to the first wind turbine rotor blade shell member, to the embedded insert or to the threaded bolt. In particular, the threaded bolt and the inner thread of the first insert will not receive substantial loads deviating from their longitudinal directions. As a result, substantial lateral forces may be applied to the first wind turbine rotor blade shell member without causing any damage.

At the same time, the method is particularly easy to carry out and does not require any complex parts or complicated procedures. This is true in particular when comparing the inventive method to other conceivable approaches for transferring lateral forces to the first wind turbine rotor blade shell member, such as by attaching flexible or rigid belts or beams to an outer surface of the wind turbine rotor blade shell member.

In an aspect, the method is used for manipulating a shape and/or a position of a first wind turbine rotor blade shell member with reference to a second wind turbine rotor blade shell member, wherein the second wind turbine rotor blade shell member has a connection section and a second insert having a connection surface and being arranged in the connection section, the second insert being adapted to be screw-connected to said other element of a wind turbine rotor, and the method comprises the following additional steps:
- providing a second tensioning block having a contact surface,
- mounting the second tensioning block to the second wind turbine rotor blade shell member with a threaded bolt which is screwed into the second insert and pretensioned such that the contact surface of the second tensioning block is pressed against the connection surface of the second insert with a pretensioning force,
- applying a lateral manipulating force to the second tensioning block,
- wherein the pretensioning force applied to the threaded bolt screwed into the second insert is selected such that between the connection surface of the second insert and the second tensioning block, an interference fit is obtained strong enough to transfer the lateral manipulating force applied to the second tensioning block to the second wind turbine rotor blade shell member,
- wherein the lateral manipulating forces are applied by means of a tensioning element connected to the first tensioning block and to the second tensioning block.

In other words, the method of claim 1 is applied in combination with a second wind turbine rotor blade shell member having a second insert, and a second tensioning block is mounted to the second wind turbine rotor blade shell member in the same manner as explained above with regard to the first tensioning block and the first wind turbine rotor blade shell member. Further, to both tensioning blocks, lateral manipulating forces are applied by means of a tensioning element connected to both tensioning blocks. The tensioning element may in particular comprise a tensioning belt guided around or otherwise connected to both tensioning blocks. The lateral manipulating force applied to the first wind turbine rotor blade shell member may be a counterforce to the lateral manipulating force applied to the second tensioning block. Through the lateral manipulating forces, the relative position of both wind turbine rotor blade shell members can be modified or maintained. It is possible as well to modify or maintain a shape of one or both of the wind turbine rotor blade shell members. Essentially the same methods can be carried out with a single wind turbine rotor blade shell member comprising the first insert as well as the second insert. Then, by mounting two tensioning blocks and applying lateral forces with the tensioning element, a specific shape of the single wind turbine rotor blade shell member can be modified or maintained.

In an aspect, the threaded bolt screwed into the respective insert has a design pretension that is to be applied when this insert is being screw-connected to said respective other element of a wind turbine rotor by means of the threaded bolt, and the pretensioning force applied by the respective tensioning block is selected in a range of 50 % to 100 % of the design pretension. In this range, a strong interference fit is obtained without running the risk to exceed the relevant design loads.

In an aspect, the first wind turbine rotor blade shell member and the second wind turbine rotor blade shell member comprise a plurality of inserts disposed on a circle, and the tensioning blocks and the tensioning element are arranged such that the lateral forces are applied substantially in a radial direction with reference to the circle. Then, the lateral forces are well suited to correct a misalignment or deformation in a radial direction.

In an aspect, the method is applied to repair a wind turbine rotor blade comprising the first wind turbine rotor blade shell member and the second wind turbine rotor blade shell member, wherein the lateral manipulating forces are applied until an end position with proper alignment of both wind turbine rotor blade shell members is obtained. This aspect addresses in particular the issue of two wind turbine rotor blade half shells having an "overbite". In particular, when two such misaligned wind turbine rotor blade half shells had already been connected to each other, it may become necessary to remove an adhesive between both half shells, that is along the leading edge and/or the trailing edge of the wind turbine rotor blade. Once the adhesive has been removed, the inventive method can be applied to obtain the desired alignment.

In an aspect, the wind turbine rotor blade shell members are connected to each other in the end position by means of an adhesive. Once the adhesive has cured, the wind turbine rotor blade shell members are fixed in their desired position relative to each other and the lateral manipulating forces need no longer be applied.

In an aspect, the method is applied to prevent a deformation of the first wind turbine rotor blade shell member and/or of the second wind turbine rotor blade shell member, wherein the lateral manipulating force applied to the respective wind turbine rotor blade shell member is applied such that the respective wind turbine rotor blade shell member is held in a desired shape. A typical deformation that may be counteracted by the inventive method is the so-called ovalization of a wind turbine rotor blade that may occur after having removed the wind turbine rotor blade shell members out of their manufacturing moulds and before providing the wind turbine rotor blade with additional stiffening members, for example a stiffening rip or plate, or a steel ring of a pitch bearing.

In an aspect, the first tensioning block and/or the second tensioning block has an axially symmetrical shape. For example, one may use a sleeve or a thick, circular disc or plate. The respective tensioning block may comprise a central tapped blind hole or a through-hole with or without an inner threat.

In an aspect, the first insert and/or the second insert is embedded in a laminate of the respective wind turbine rotor blade shell member. Then, the respective insert is fixedly connected in the wind turbine rotor blade shell member. In an alternative, the inserts can be mounted in bores of the wind turbine rotor blade shell members by means of an adhesive.

In an aspect, the first tensioning block and/or the second tensioning block is mounted to the respective wind turbine rotor blade shell member by means of an outer thread of the respective threaded bolt, wherein the outer thread is guided through a through-hole of the respective tensioning block and fixed with a threaded nut. This is an easy yet efficient way to connect the tensioning block to the bolt. The desired pretension can be applied by fastening the nut to the desired level.

In an aspect, the first tensioning block and/or the second tensioning block is mounted to the respective wind turbine rotor blade shell member by means of an outer thread of the respective threaded bolt, wherein the outer thread is screwed into an inner thread of the respective tensioning block. In this aspect, no additional nut is needed to mount the tensioning block. The threaded bolt is pretensioned by turning the tensioning block. To this end, the tensioning block may comprise a hexagon head or another specific contour making it easy to apply a fastening tool.

The inner thread may be formed in the respective tensioning block in a distance from the contact surface of the respective tensioning block, so that a section of the threaded bolt having a sufficient length (wherein this section of the threaded bolt may or may not have an outer thread) remains free and provides extensibility for the desired pretension.

In an aspect, the first tensioning block and/or the second tensioning block is mounted to the respective wind turbine rotor blade shell member by at least one additional threaded bolt screwed into an additional insert of the respective wind turbine rotor blade shell member. Thereby, the additional threaded bolt can be pretensioned as described above for the threaded bolt screwed into the first insert, so that an even stronger interference fit is obtained. In this way, particularly strong lateral manipulating forces can be applied without running a risk to damage the respective wind turbine rotor blade shell members' structure.

In an aspect, the first tensioning block and/or the second tensioning block and the respective threaded bolt are manufactured in one piece or are firmly assembled. In this aspect, no separate threaded bolts are needed to mount the respective tensioning blocks to the wind turbine rotor blade shell members.

In an aspect, the first tensioning block and/or the second tensioning block has a longitudinal section with an outer surface adapted to receive a connecting section of the tensioning element. This outer surface, for example, can be provided by a circumferential groove of the tensioning block. This makes it easy to maintain a desired position of the tensioning element.

In an aspect, the outer surface is rotatably mounted to the respective tensioning block. For example, the outer surface can be an outer surface of a ring-shaped element connected to the remainder of the respective tensioning block with a roller bearing. Thereby, the respective lateral manipulating force will be applied to the tensioning block in a smooth and symmetrical manner, in particular when using a tensioning belt as tensioning element and guiding the same around several tensioning blocks.

In the following, the invention is explained in greater detail with reference to embodiments shown in drawings. The figures show:
- Fig. 1: a first tensioning block mounted to a first wind turbine rotor blade shell member in a schematic drawing,
- Fig. 2: the tensioning block shown in Fig. 1 in cross-section along its longitudinal axis,
- Fig. 3: the tensioning block of Figs. 1 and 2 in a perspective view,
- Fig. 4: two wind turbine rotor blade shell members with four tensioning blocks and a tensioning element in a schematic view,
- Fig. 5: two other wind turbine rotor blade shell members with four tensioning blocks and a tensioning element mounted thereto in a schematic view,
- Fig. 6: a wind turbine rotor blade shell member with two tensioning blocks mounted thereto connected by a tensioning element in a schematic view,
- Fig. 7: two wind turbine rotor blade shell members to each of which a tensioning block is fastened by two threaded bolts in a schematic view,
- Fig. 8: one of the tensioning blocks of Fig. 7 in an enlarged view, and
- Fig. 9: another tensioning block in a schematic, sectional view
- Fig. 10: a tensioning block with a rotatable outer surface in a schematic drawing,
- Fig. 11: a tensioning block mounted with a nut in a schematic drawing,
- Fig. 12: two wind turbine rotor blade shell members with four tensioning blocks and a tensioning element in a schematic view,
- Fig. 13: an enlarged, cross-sectional view of a tensioning block of Fig. 12,
- Fig. 14: two wind turbine rotor blade shell members with six tensioning blocks and a tensioning element in a schematic view,
- Fig. 15a: a tensioning element with a hook mounted to a tensioning block with a lug in a schematic view,
- Fig. 15b: a tensioning block mounted to a tensioning block with a lug in two schematic views,
- Fig. 15c: another tensioning block mounted to a tensioning element in a schematic view, and
- Fig. 16: a wind turbine rotor blade in a perspective, schematic view.

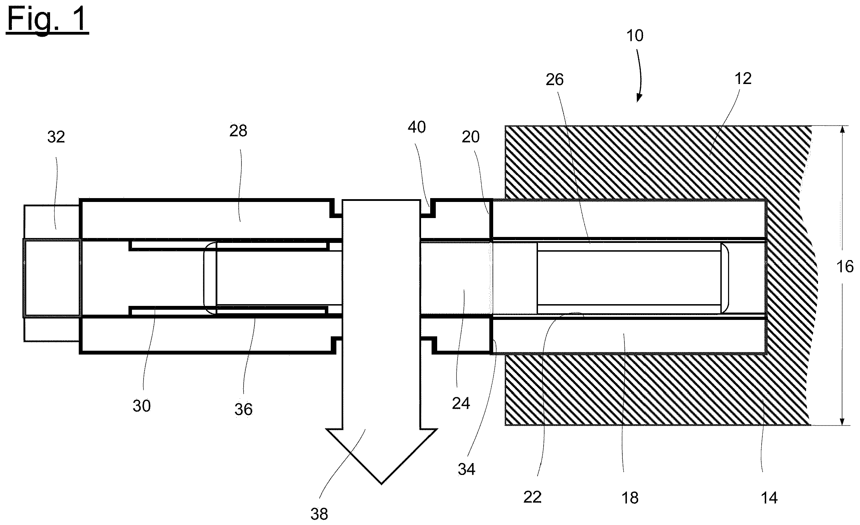

Fig. 1 shows a first wind turbine rotor blade shell member 10, wherein only a connection section 12 thereof is included in the view. The connection section 12 comprises a laminate 14 of a fibre-reinforced composite material having a laminate thickness 16. A first insert 18 is embedded in the laminate 14. The first insert 18 is an axially symmetrical sleeve having a contact surface 20 and an inner thread 22. The first insert 18 is adapted to be screw-connected to another element of a wind turbine rotor, which is not shown in the drawing, and may for example be a wind turbine rotor hub. In this case, the connection section 12 is a root section of the first wind turbine rotor blade shell member 10.

A threaded bolt 24 has an outer thread 26 and is screwed into the inner thread 22 of the first insert 18.

To the left of Fig. 1, one can see a first tensioning block 28 that is sleeve-shaped as well. It comprises an inner thread 30 and a hexagon head 32. At the opposite end, the first tensioning block 28 comprises a contact surface 34 abutting the connection surface 20 of the first insert 18.

The threaded bolt 24 is pretensioned by screwing the first tensioning block 28 onto the threaded bolt 24 by means of a suitable tool connecting to the hexagon head 32. Thereby, the contact surface 34 is pressed against the connection surface 20 with a pretensioning force.

After having mounted the first tensioning block 28 to the first insert 18 as described, a lateral manipulating force is applied to the first tensioning block 28 with a tensioning element 38, as illustrated by the arrow pointing downwards in Fig. 1. The tensioning element 38 may be a tensioning belt which is guided around the first tensioning block 28 in a longitudinal section thereof having a circumferential groove 40.

By means of the pretension applied to the threaded bolt 24, an interference fit between the connection surface 20 and the contact surface 34 is obtained, strong enough to transfer the lateral manipulating force applied with tensioning element 38 to the first wind turbine rotor blade shell member 10.

The first insert 18, the threaded bolt 24 and the first tensioning block 28 each have a longitudinal axis, wherein these axes are all aligned and correspond to a longitudinal direction of the first wind turbine rotor blade shell member 10.

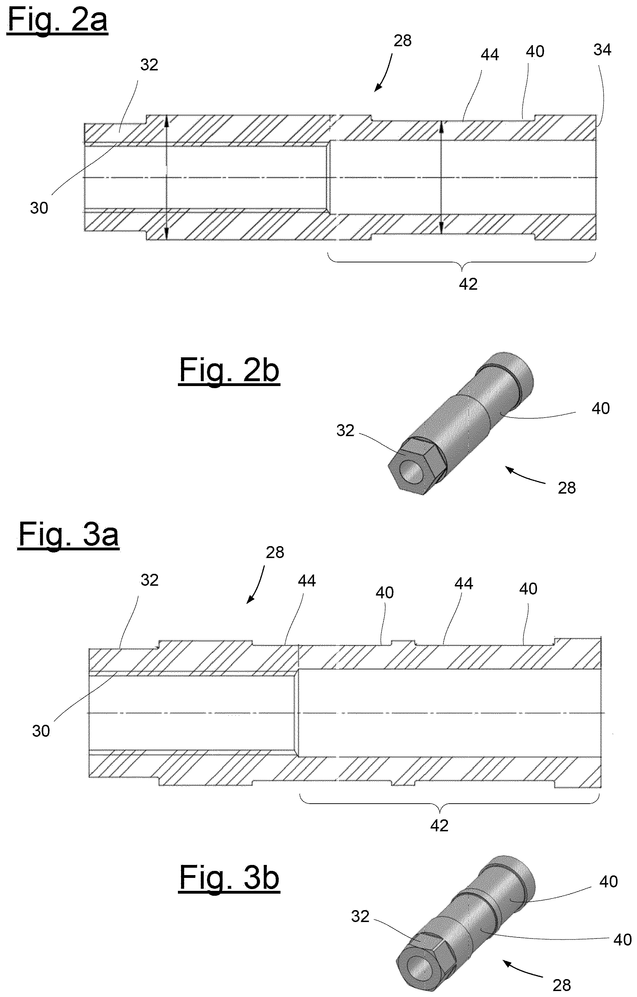

Fig. 2a shows the first tensioning block 28 in cross-section. The inner thread 30 is seen to the left of Fig. 2a and extends over about a little less than 50% of the entire length of the first tensioning block 28. The remaining longitudinal section 42 of the first tensioning block 28 does not have an inner thread, so that the threaded bolt 24 inserted into the first tensioning block 28 inside this longitudinal section 42 is free to provide the desired pretension. The groove 40 is arranged in the longitudinal section 42, relatively close to the contact surface 34. The bottom of the groove 40 provides an outer surface 44 about which a tensioning element 38 can be guided.

The perspective view of Fig. 2b clearly shows the groove 40 and the hexagon head 32 of the first tensioning block 28.

Figs. 3a and 3b show another tensioning block 28 having a hexagon head 32, an inner thread 30 as well as a longitudinal section 42 similar to the tensioning block 28 of Figs. 2a and 2b. The tensioning block 28 of Figs. 3a and 3b has two grooves 40 arranged side by side, so that two tensioning elements 38 can be connected, in particular to obtain crosswise tensioning.

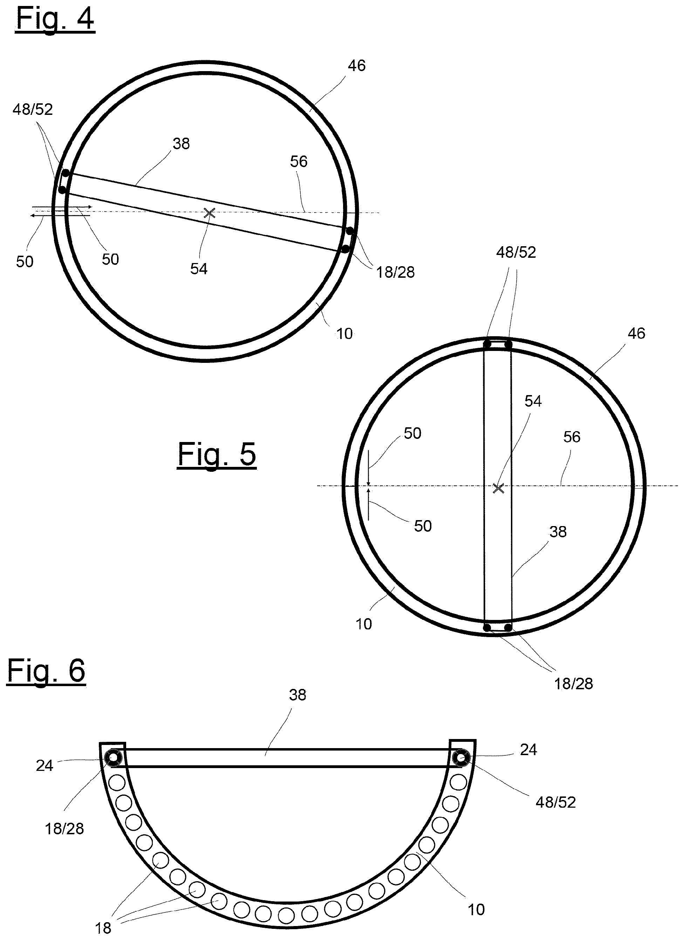

Figs. 4 to 7 illustrate how the method can be applied to manipulate a shape and/or a position of wind turbine rotor blade shell members. Each figure shows a wind turbine rotor blade root section seen from a hub.

In Fig. 4, a second wind turbine rotor blade shell member 46, namely a second half shell, is placed on top of a first wind turbine rotor blade shell member 10, a half shell as well. It is assumed that both wind turbine rotor blade shell members 10, 46 had initially been connected to one another with improper alignment, so that in an area indicated by two arrows 50, the wind turbine rotor blade had an "overbite". An adhesive provided between both wind turbine rotor blade shell members 10, 46 at the relevant section with the overbite has been removed. The first wind turbine rotor blade shell member 10 comprises two first inserts 18. To each of these first inserts 18, a first tensioning block 28 is mounted.

The second wind turbine rotor blade shell member 46 comprises two second inserts 48 to each of which is mounted a second tensioning block 52. The first inserts 18 and the second inserts 48, as well as possibly many more inserts of the wind turbine rotor blade shell members not shown in the figure, are arranged on a circle having a centre 54. A tensioning element 38 in the form of a tensioning belt is guided about both first tensioning blocks 28 and both second tensioning blocks 52 such that the lateral forces applied by the tensioning element 38 to the tensioning blocks 28, 52 are aligned essentially in a radial direction with regard to the circle.

The manipulating forces applied to the respective tensioning blocks 28, 52 are transferred to the wind turbine rotor blade shell members 10, 46, in particular so that the second wind turbine rotor blade shell member 46 will be properly aligned with reference to the first wind turbine rotor blade shell member 10, and vice versa.

In Fig. 4, the first inserts 18 and the second inserts 48 are arranged close to a connection plane 56 between both wind turbine rotor blade shell members. The connection plane 56 is aligned substantially horizontally.

In Fig. 5, two similar wind turbine rotor blade shell members 10, 46 are shown, also having a connection plane 56 and first inserts 18 and second inserts 48 arranged on a circle with a centre 54. Also similar to the situation of Fig. 4, to each of these first and second inserts 18, 48, a respective first or second tensioning block 28, 52 is mounted to. In contrast to Fig. 4, however, the first inserts 18 are arranged at a lowermost position of the first wind turbine rotor blade shell member 10, and the second inserts 48 are arranged at a topmost position of the second wind turbine rotor blade shell member 46, such that the tensioning element 38 guided around the corresponding first and second tensioning blocks 28, 52 is arranged essentially vertically. Applying the lateral manipulating forces by means of the tensioning element 38 will therefore press the improperly connected edges of the wind turbine rotor blade shell member 10, 46 against each other, as illustrated by arrows 50.

Fig. 6 shows another application of the method to a single, first wind turbine rotor blade shell member 10. This first wind turbine rotor blade shell member 10 may also be a wind turbine rotor blade half shell. It comprises a plurality of inserts 18 arranged on a circle. At the top left, the wind turbine rotor blade shell member 10 comprises a first insert 18 with a threaded bolt 24 to which a first tensioning block 28 is mounted to. To the top right, the wind turbine rotor blade shell member 10 comprises a second insert 48 with a threaded bolt 24 to which a second tensioning block 52 is mounted to. A tensioning element 38 is connected to the first tensioning block 28 and to the second tensioning block 52 and applies lateral manipulating forces to the tensioning blocks 28, 52. These lateral manipulating forces may be used to prevent a deformation of the first wind turbine rotor blade shell member 10 during storage, and is thus used to maintain a desired shape of the first wind turbine rotor blade shell member 10.

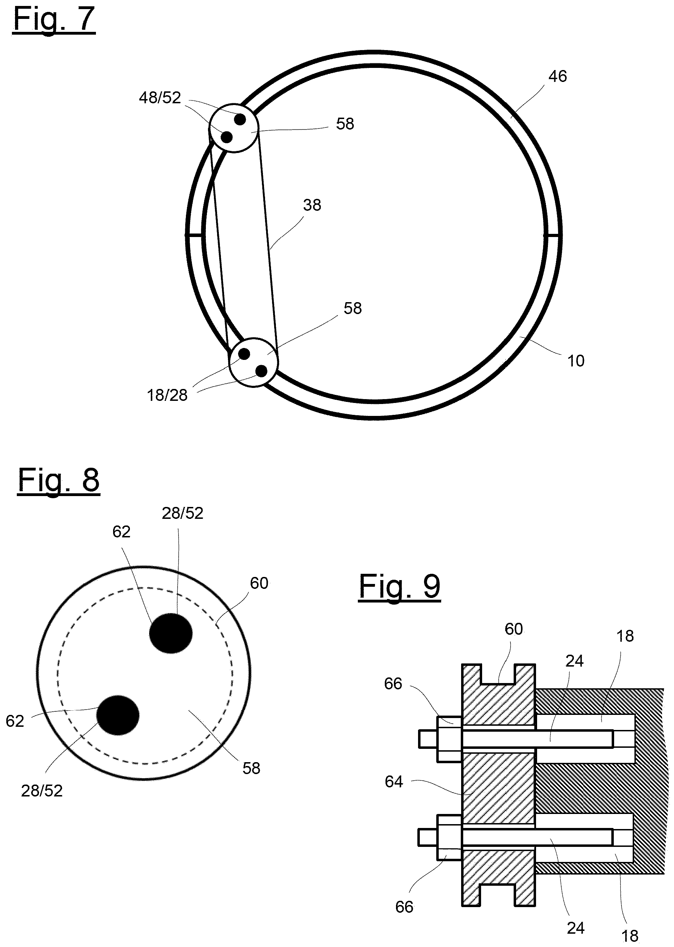

In Fig. 7, another pair of a first wind turbine rotor blade shell member 10 and a second wind turbine rotor blade shell member 46 arranged on top of the first wind turbine rotor blade shell member 10 is shown. The first wind turbine rotor blade shell member 10 comprises two first inserts 18 to each of which a first tensioning block 28 is mounted to. The second wind turbine rotor blade shell member 46 comprises two second inserts 48, to each of which a second tensioning block 52 is mounted to. In this embodiment, a deflector disk 58 larger than the first tensioning blocks 28 is pushed onto the two first tensioning blocks 28. A similar deflector disk 58 is pushed onto the two second tensioning blocks 52. A tensioning element 38 is guided around both deflector disks 58, so that the lateral manipulating forces are applied to the respective first and second tensioning blocks 28, 52 via the deflector disks 58.

Fig. 8 shows an enlarged view of the deflector disk 58 of Fig. 7. The deflector disk 58 is a thick, circular disc having a circumferential groove 60 and two receiving portions 62 each receiving one of the respective first or second tensioning blocks 28, 52.

Another option to distribute the lateral manipulating forces of the tensioning element 38 to the respective inserts 18, 48 is to use one larger tensioning block 64 mounted to the respective wind turbine rotor blade shell member 10, 46 by means of two or more inserts 18, 48 and two or more threaded bolts 24. These larger tensioning blocks 64 may be shaped for example similar to the deflector disks 58 and would be pressed against the two respective inserts 18, 48 by the respective screw connections.

Fig. 9 shows an example of such a larger tensioning block 64 in a side view. One recognizes the circumferential groove 60 adapted to receive the tensioning element 38. The larger tensioning block 64 is mounted to two first inserts 18 by means of two threaded bolts 24 each guided through a through-hole in the large tensioning block 64 and pretensioned with a nut 66.

The deflector disk 28 and larger tensioning block 64 ensure an even load transfer to both threaded bolts 24 or inserts 18, 48, especially if the tensioning element 38 does not run through the center of the rotor blade cross section.

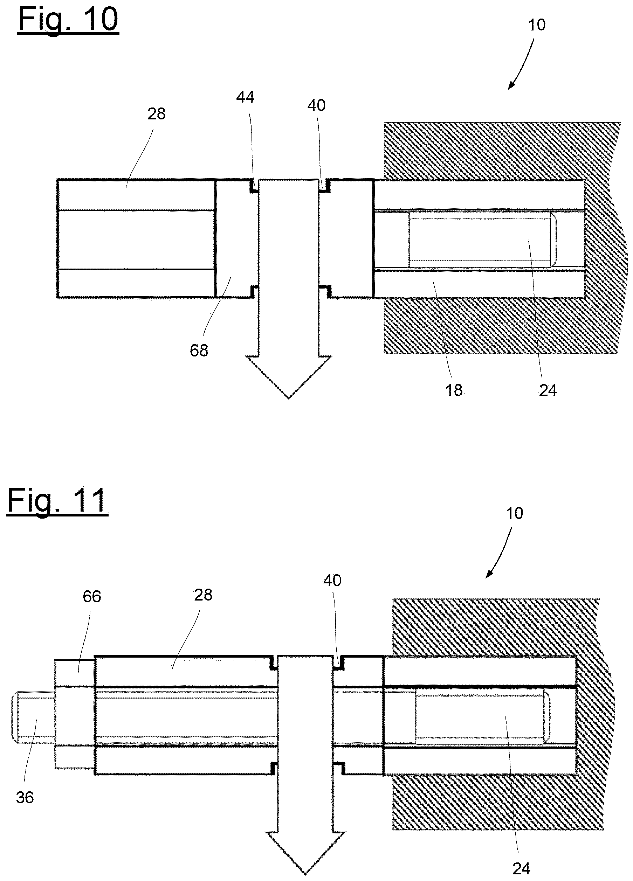

Fig. 10 shows another first tensioning block 28 mounted to a first insert 18 with a threaded bolt 24 which is formed integrally with the first tensioning block 28. The threaded bolt 24 is screwed into a first insert 18. The first tensioning block 28 is provided with a ring-shaped element 68 having a groove 40 and an outer surface 44. The ring-shaped element 68 is rotatably mounted to the first tensioning block 28.

In Fig. 11, still another first tensioning block 28 is shown mounted to a wind turbine rotor blade shell member 10 by means of a threaded bolt 24 having an outer thread 36. The outer thread 36 is guided through a through-hole of the tensioning block 28 and fixed with a threaded nut 66.

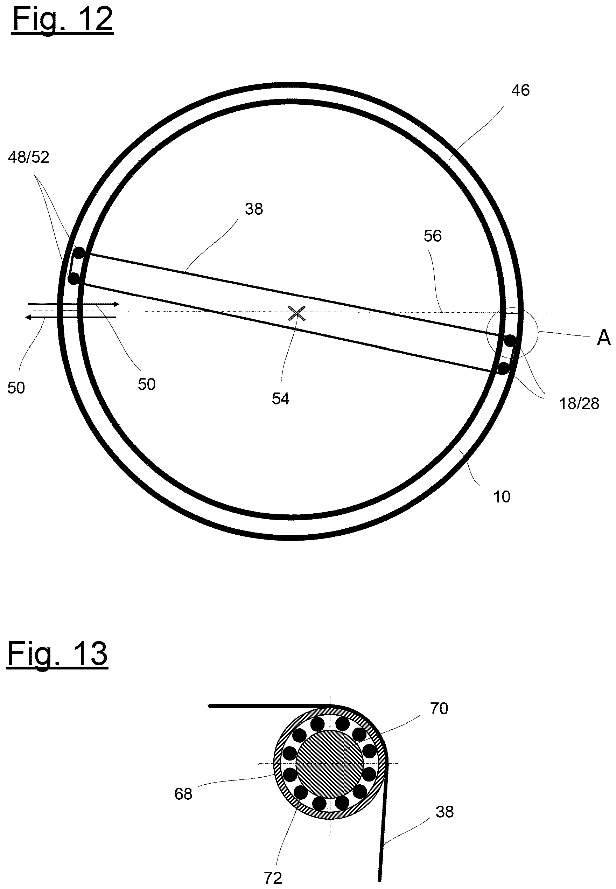

Fig. 12 shows another example for using the method to correct an "overbite", similar to the arrangement of Fig. 4. As in Fig. 4, two first tensioning blocks 28 are mounted to two first inserts 18 of the first wind turbine rotor blade shell member 10, and two second tensioning blocks 52 are mounted to two second inserts 48 of the second wind turbine rotor blade shell member 46. Each of the tensioning blocks 28, 52 is provided with a ring-shaped element 68 having a groove 40 and an outer surface 44 and rotatably mounted to the respective tensioning block 28, 52, as has been explained with reference to Fig. 10.

Fig. 13 shows an enlarged cross-sectional view of the first tensioning block 28 of Fig. 12 (area labelled "A"). One can see the ring-shaped element 68 connected to a core section 70 of the first tensioning block 28 via a roller bearing 72. A tensioning element in the form of a tensioning belt 38 is guided around the outer surface 44.

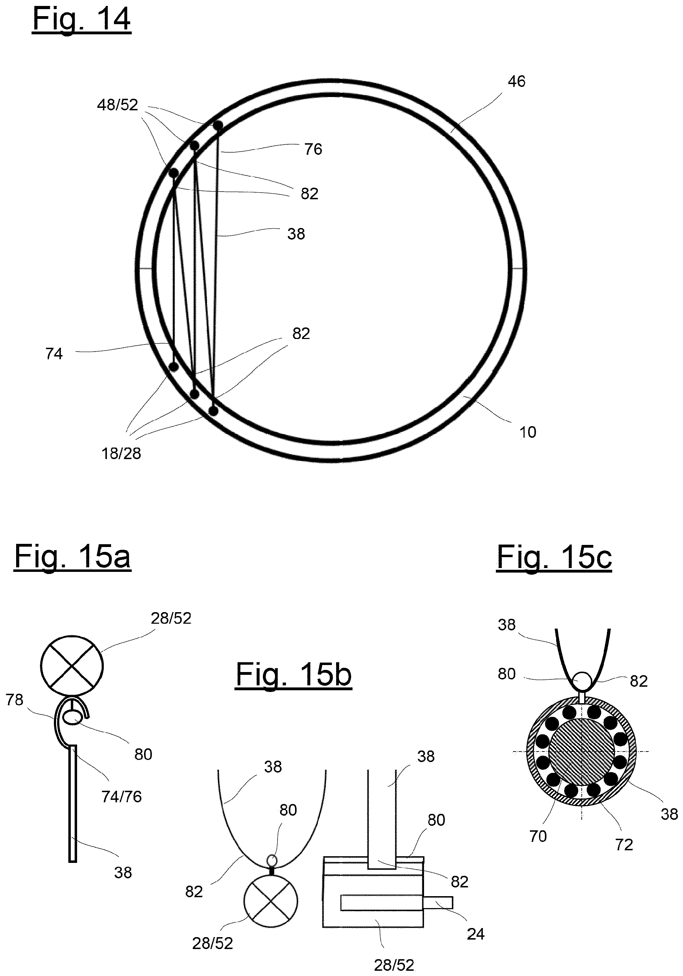

Fig. 14 shows another arrangement of first and second wind turbine rotor blade shell members 10, 46 similar to the situation of Fig. 7. Three first tensioning blocks 28 are mounted to three first inserts 18 of the first wind turbine rotor blade shell member 10; three second tensioning blocks 52 are mounted to three second inserts 48 of the second wind turbine rotor blade shell member 46. A tensioning element 38 in the form of a tensioning belt is connecting the first and second tensioning blocks 28, 52 in a zigzag-pattern. A first end 74 of the tensioning element 38 is connected to a first tensioning block 28, the opposite second end 76 of the tensioning element 38 is connected to a second tensioning block 52. Intermediate portions 82 of the tensioning element 38 are connected to the remaining tensioning blocks 28, 52.

As is shown in Fig. 15a, the first end 74 and the second end 76 of the tensioning element 38 each comprise a hook 78 which is hooked in a lug 80 formed on the respective tensioning block 28, 52.

Fig. 15b shows how the intermediate portions 82 of the tensioning element 38 shown in Fig. 14 can be connected to the remaining tensioning blocks 28, 52. These tensioning blocks 28, 52 are provided with a lug 80 as well, and the respective intermediate portions 82 of the tensioning element 38 are guided through the lugs 80. To the left of Fig. 15b, this is shown in cross-section, to the right in a side view.

Fig. 15c shows another way to connect the intermediate portions 82 of the tensioning element 38 shown in Fig. 14 to the remaining tensioning blocks 28, 52. In this case, the tensioning block 28, 52 is provided with a ring-shaped element 68 rotatably mounted to a core section 70 of the tensioning block 28, 52 with a roller bearing 72. The ring-shaped element 68 is provided with a lug 80 through which an intermediate section 82 of the tensioning element 38 is guided.

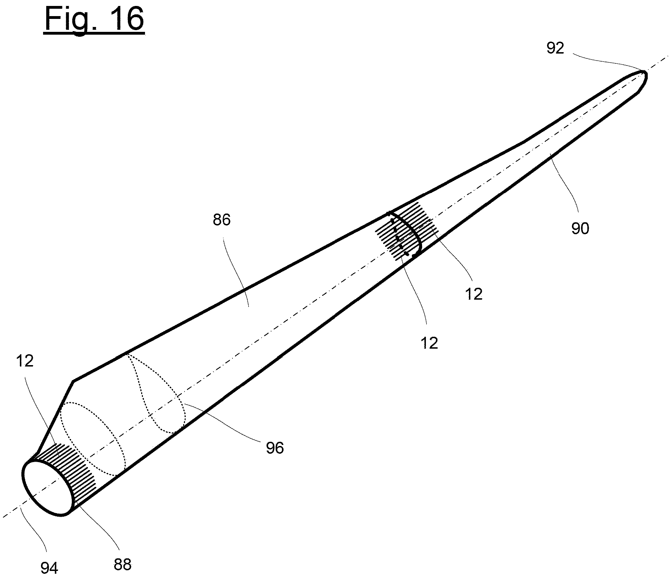

Fig. 16 shows a wind turbine rotor blade 84 in a perspective, schematic view. It comprises a first longitudinal section 86 including a wind turbine rotor blade root 88 and a second longitudinal section 90 including a wind turbine rotor blade tip 92. Both longitudinal sections 86, 90 have a common longitudinal axis 94. The wind turbine rotor blade 84 also has an aerodynamic profile 96, whereas it is circular at the wind turbine rotor blade root 88. The first longitudinal section 86 and the second longitudinal section 90 each comprise one or more wind turbine rotor blade shell members, such as a pressure-side half shell and a suction-side half shell.

The first longitudinal section 86 has a connection section 12 at the wind turbine rotor blade root 88. This connection section 12 is adapted to be fastened to a wind turbine rotor blade hub (not shown). At its opposite end, the first longitudinal section 86 has another connection section 12 adapted to be fastened to the longitudinal section 90.

The second longitudinal section 90 has a connection section 12 at its end away from the wind turbine rotor blade tip 92. This connection section 12 is adapted to be fastened to the first longitudinal section 86.

Each of these connection sections 12 comprises a combination of inserts and/or threaded bolts, which are indicated in the Fig. 16 schematically only.

### List of reference numerals

- 10: first wind turbine rotor blade shell member
- 12: connection section
- 14: laminate
- 16: laminate thickness
- 18: first insert
- 20: connection surface
- 22: inner thread
- 24: threaded bolt
- 26: outer thread
- 28: first tensioning block
- 30: inner thread
- 32: hexagon head
- 34: contact surface
- 36: outer thread
- 38: tensioning element
- 40: groove
- 42: longitudinal section
- 44: outer surface
- 46: second wind turbine rotor blade shell member
- 48: second insert
- 50: arrow
- 52: second tensioning block
- 54: centre
- 56: connection plane
- 58: deflector disk
- 60: groove
- 62: receiving portion
- 64: tensioning block
- 66: nut
- 68: ring-shaped element
- 70: core section
- 72: roller bearing
- 74: first end
- 76: second end
- 78: hook
- 80: lug
- 82: intermediate section
- 84: wind turbine rotor blade
- 86: first longitudinal section
- 88: wind turbine rotor blade root
- 90: second longitudinal section
- 92: wind turbine rotor blade tip
- 94: longitudinal axis
- 96: aerodynamic profile

## Claims

1. A method for manipulating a shape and/or a position of a first wind turbine rotor blade shell member (10), wherein the first wind turbine rotor blade shell member (10) has a connection section (12) and a first insert (18) having a connection surface (20) and being arranged in the connection section (12), the first insert (18) being adapted to be screw-connected to another element of a wind turbine rotor, the method comprising the following steps:
• providing a first tensioning block (28) having a contact surface (34),
• mounting the first tensioning block (28) to the first wind turbine rotor blade shell member (10) with a threaded bolt (24) which is screwed into the first insert (18) and pretensioned such that the contact surface (34) of the first tensioning block (28) is pressed against the connection surface (20) of the first insert (18) with a pretensioning force,
• applying a lateral manipulating force to the first tensioning block (28),
• wherein the pretensioning force is selected such that between the connection surface (20) of the first insert (18) and the contact surface (34) of the first tensioning block (28), an interference fit is obtained strong enough to transfer the lateral manipulating force to the first wind turbine rotor blade shell member (10).

2. The method of claim 1 for manipulating a shape and/or a position of a first wind turbine rotor blade shell member (10) with reference to a second wind turbine rotor blade shell member (46), wherein the second wind turbine rotor blade shell member (46) has a connection section (12) and a second insert (48) having a connection surface (34) and being arranged in the connection section (12), the second insert (48) being adapted to be screw-connected to said other element of a wind turbine rotor, the method comprising the following additional steps:
• providing a second tensioning block (52) having a contact surface (34),
• mounting the second tensioning block (52) to the second wind turbine rotor blade shell member (46) with a threaded bolt (24) which is screwed into the second insert (48) and pretensioned such that the contact surface (34) of the second tensioning block (52) is pressed against the connection surface (20) of the second insert (48) with a pretensioning force,
• applying a lateral manipulating force to the second tensioning block (52),
• wherein the pretensioning force applied to the threaded bolt (24) screwed into the second insert (48) is selected such that between the connection surface (34) of the second insert (48) and the second tensioning block (52), an interference fit is obtained strong enough to transfer the lateral manipulating force applied to the second tensioning block (52) to the second wind turbine rotor blade shell member (46),
• wherein the lateral manipulating forces are applied by means of a tensioning element (38) connected to the first tensioning block (28) and to the second tensioning block (52).

3. The method of claim 1 or 2, wherein the threaded bolt (24) screwed into the respective insert (18, 48) has a design pretension that is to be applied when this insert (18, 48) is being screw-connected to said respective other element of a wind turbine rotor by means of the threaded bolt (24), and the pretensioning force applied by the respective tensioning block (28, 52) is selected in a range of 50 % to 100 % of the design pretension.

4. The method of claim 2 or 3, wherein the first wind turbine rotor blade shell member (10) and second wind turbine rotor blade shell member (46) comprise a plurality of inserts (18, 48) disposed on a circle, and the tensioning blocks (28, 52) and the tensioning element (38) are arranged such that the lateral manipulating forces are applied substantially in a radial direction with reference to the circle.

5. The method of any of the claims 2 to 4, wherein the method is applied to repair a wind turbine rotor blade comprising the first wind turbine rotor blade shell member (10) and the second wind turbine rotor blade shell member (46), wherein the lateral manipulating forces are applied until an end position with proper alignment of both wind turbine rotor blade shell members (10, 46) is obtained.

6. The method of claim 5, wherein the wind turbine rotor blade shell members (10, 46) are connected to each other in the end position by means of an adhesive.

7. The method of any of the claims 1 to 4, wherein the method is applied to prevent a deformation of the first wind turbine rotor blade shell member (10) and/or of the second wind turbine rotor blade shell member (46), wherein the lateral manipulating force applied to the respective wind turbine rotor blade shell member (10, 46) is applied such that the respective wind turbine rotor blade shell member (10, 46) is held in a desired shape.

8. The method of any of the claims 1 to 7, wherein the first tensioning block (28) and/or the second tensioning block (52) has an axially symmetrical shape.

9. The method of any of the claims 1 to 8, wherein the first insert (18) and/or the second insert (48) is embedded in a laminate (14) of the respective wind turbine rotor blade shell member (10, 46).

10. The method of any of the claims 1 to 9, wherein the first tensioning block (28) and/or the second tensioning block (52) is mounted to the respective wind turbine rotor blade shell member (10, 46) by means of an outer thread (36) of the respective threaded bolt (24), wherein the outer thread (36) is guided through a through-hole of the respective tensioning block (28, 52) and fixed with a threaded nut (66).

11. The method of any of the claims 1 to 9, wherein the first tensioning block (28) and/or the second tensioning block (52) is mounted to the respective wind turbine rotor blade shell member (10, 46) by means of an outer thread (36) of the respective threaded bolt (24), wherein the outer thread (36) is screwed into an inner thread (30) of the respective tensioning block (28, 52).

12. The method of any of the claims 1 to 10, wherein the first tensioning block (28) and/or the second tensioning block (52) is mounted to the respective wind turbine rotor blade shell member (10, 46) by at least one additional threaded bolt (24) screwed into an additional insert of the respective wind turbine rotor blade shell member (10, 46).

13. The method of any of the claims 1 to 9, wherein the first tensioning block (28) and/or the second tensioning block (52) and the respective threaded bolt (24) are manufactured in one piece or are firmly assembled.

14. The method of any of the claims 1 to 13, wherein the first tensioning block (28) and/or the second tensioning block (52) has a longitudinal section (42) with an outer surface (44) adapted to receive a connecting section of the tensioning element (38).

15. The method of claim 14, wherein the outer surface (44) is rotatably mounted to the respective tensioning block (28, 52).

## Patentansprüche

1. Ein Verfahren zum Manipulieren einer Form und/oder einer Position eines ersten Windenergieanlagenrotorblattschalenelements (10), wobei das erste Windenergieanlagenrotorblattschalenelement (10) einen Verbindungsabschnitt (12) und einen ersten Einsatz (18) aufweist, der eine Verbindungsfläche (20) aufweist und in dem Verbindungsabschnitt (12) angeordnet ist, wobei der erste Einsatz (18) dazu geeignet ist, mit einem anderen Element eines Windenergieanlagenrotors schraubverbunden zu werden, wobei das Verfahren die folgenden Schritte umfasst:
• Bereitstellen eines ersten Spannblocks (28), der eine Kontaktfläche (34) aufweist,
• Montieren des ersten Spannblocks (28) an dem ersten Windenergieanlagenrotorblattschalenelement (10) mit einem Gewindebolzen (24), der in den ersten Einsatz (18) geschraubt und derart vorgespannt wird, dass die Kontaktfläche (34) des ersten Spannblocks (28) mit einer Vorspannkraft gegen die Verbindungsfläche (20) des ersten Einsatzes (18) gepresst wird,
• Aufbringen einer seitlichen Manipulationskraft auf den ersten Spannblock (28),
• wobei die Vorspannkraft derart gewählt ist, dass zwischen der Verbindungsfläche (20) des ersten Einsatzes (18) und der Kontaktfläche (34) des ersten Spannblocks (28) eine Reibschlussverbindung erhalten wird, die stark genug ist, um die seitliche Manipulationskraft auf das erste Windenergieanlagenrotorblattschalenelement (10) zu übertragen.

2. Das Verfahren nach Anspruch 1 zum Manipulieren einer Form und/oder einer Position eines ersten Windenergieanlagenrotorblattschalenelements (10) in Bezug auf ein zweites Windenergieanlagenrotorblattschalenelement (46), wobei das zweite Windenergieanlagenrotorblattschalenelement (46) einen Verbindungsabschnitt (12) und einen zweiten Einsatz (48) aufweist, der eine Verbindungsfläche (34) aufweist und in dem Verbindungsabschnitt (12) angeordnet ist, wobei der zweite Einsatz (48) dazu geeignet ist, mit dem besagten anderen Element eines Windenergieanlagenrotors schraubverbunden zu werden, wobei das Verfahren die folgenden zusätzlichen Schritte umfasst:
• Bereitstellen eines zweiten Spannblocks (52), der eine Kontaktfläche (34) aufweist,
• Montieren des zweiten Spannblocks (52) an dem zweiten Windenergieanlagenrotorblattschalenelement (46) mit einem Gewindebolzen (24), der in den zweiten Einsatz (48) geschraubt und derart vorgespannt wird, dass die Kontaktfläche (34) des zweiten Spannblocks (52) mit einer Vorspannkraft gegen die Verbindungsfläche (20) des zweiten Einsatzes (48) gepresst wird,
• Aufbringen einer seitlichen Manipulationskraft auf den zweiten Spannblock (52),
• wobei die auf den in den zweiten Einsatz (48) geschraubten Gewindebolzen (24) aufgebrachte Vorspannkraft derart gewählt ist, dass zwischen der Verbindungsfläche (34) des zweiten Einsatzes (48) und dem zweiten Spannblock (52) eine Reibschlussverbindung erhalten wird, die stark genug ist, um die auf den zweiten Spannblock (52) aufgebrachte seitliche Manipulationskraft auf das zweite Windenergieanlagenrotorblattschalenelement (46) zu übertragen,
• wobei die seitlichen Manipulationskräfte mittels eines Spannelements (38) aufgebracht werden, das mit dem ersten Spannblock (28) und mit dem zweiten Spannblock (52) verbunden ist.

3. Das Verfahren nach Anspruch 1 oder 2, wobei der in den jeweiligen Einsatz (18, 48) geschraubte Gewindebolzen (24) eine Auslegungsvorspannung aufweist, die aufzubringen ist, wenn dieser Einsatz (18, 48) mittels des Gewindebolzens (24) mit dem besagten jeweiligen anderen Element eines Windenergieanlagenrotors schraubverbunden wird, und die durch den jeweiligen Spannblock (28, 52) aufgebrachte Vorspannkraft in einem Bereich von 50 % bis 100 % der Auslegungsvorspannung gewählt wird.

4. Das Verfahren nach Anspruch 2 oder 3, wobei das erste Windenergieanlagenrotorblattschalenelement (10) und das zweite Windenergieanlagenrotorblattschalenelement (46) eine Vielzahl von Einsätzen (18, 48) umfassen, die auf einem Kreis angeordnet sind, und die Spannblocks (28, 52) und das Spannelement (38) derart angeordnet sind, dass die seitlichen Manipulationskräfte im Wesentlichen in einer radialen Richtung in Bezug auf den Kreis aufgebracht werden.

5. Das Verfahren nach einem der Ansprüche 2 bis 4, wobei das Verfahren angewendet wird, um ein Windenergieanlagenrotorblatt zu reparieren, das das erste Windenergieanlagenrotorblattschalenelement (10) und das zweite Windenergieanlagenrotorblattschalenelement (46) umfasst, wobei die seitlichen Manipulationskräfte aufgebracht werden, bis eine Endposition mit korrekter Ausrichtung beider Windenergieanlagenrotorblattschalenelemente (10, 46) erhalten wird.

6. Das Verfahren nach Anspruch 5, wobei die Windenergieanlagenrotorblattschalenelemente (10, 46) in der Endposition mittels eines Klebstoffs miteinander verbunden werden.

7. Das Verfahren nach einem der Ansprüche 1 bis 4, wobei das Verfahren angewendet wird, um eine Verformung des ersten Windenergieanlagenrotorblattschalenelements (10) und/oder des zweiten Windenergieanlagenrotorblattschalenelements (46) zu verhindern, wobei die auf das jeweilige Windenergieanlagenrotorblattschalenelement (10, 46) aufgebrachte seitliche Manipulationskraft derart aufgebracht wird, dass das jeweilige Windenergieanlagenrotorblattschalenelement (10, 46) in einer gewünschten Form gehalten wird.

8. Das Verfahren nach einem der Ansprüche 1 bis 7, wobei der erste Spannblock (28) und/oder der zweite Spannblock (52) eine axialsymmetrische Form aufweist.

9. Das Verfahren nach einem der Ansprüche 1 bis 8, wobei der erste Einsatz (18) und/oder der zweite Einsatz (48) in ein Laminat (14) des jeweiligen Windenergieanlagenrotorblattschalenelements (10, 46) eingebettet ist.

10. Das Verfahren nach einem der Ansprüche 1 bis 9, wobei der erste Spannblock (28) und/oder der zweite Spannblock (52) an dem jeweiligen Windenergieanlagenrotorblattschalenelement (10, 46) mittels eines Außengewindes (36) des jeweiligen Gewindebolzens (24) montiert wird, wobei das Außengewinde (36) durch ein Durchgangsloch des jeweiligen Spannblocks (28, 52) geführt und mit einer Gewindemutter (66) fixiert wird.

11. Das Verfahren nach einem der Ansprüche 1 bis 9, wobei der erste Spannblock (28) und/oder der zweite Spannblock (52) an dem jeweiligen Windenergieanlagenrotorblattschalenelement (10, 46) mittels eines Außengewindes (36) des jeweiligen Gewindebolzens (24) montiert wird, wobei das Außengewinde (36) in ein Innengewinde (30) des jeweiligen Spannblocks (28, 52) geschraubt wird.

12. Das Verfahren nach einem der Ansprüche 1 bis 10, wobei der erste Spannblock (28) und/oder der zweite Spannblock (52) an dem jeweiligen Windenergieanlagenrotorblattschalenelement (10, 46) durch mindestens einen zusätzlichen Gewindebolzen (24) montiert wird, der in einen zusätzlichen Einsatz des jeweiligen Windenergieanlagenrotorblattschalenelements (10, 46) geschraubt wird.

13. Das Verfahren nach einem der Ansprüche 1 bis 9, wobei der erste Spannblock (28) und/oder der zweite Spannblock (52) und der jeweilige Gewindebolzen (24) einstückig gefertigt oder fest zusammengebaut sind.

14. Das Verfahren nach einem der Ansprüche 1 bis 13, wobei der erste Spannblock (28) und/oder der zweite Spannblock (52) einen Längsabschnitt (42) mit einer Außenfläche (44) aufweist, die dazu geeignet ist, einen Verbindungsabschnitt des Spannelements (38) aufzunehmen.

15. Das Verfahren nach Anspruch 14, wobei die Außenfläche (44) drehbar an dem jeweiligen Spannblock (28, 52) gelagert ist.

## Revendications

1. Procédé de manipulation d'une forme et/ou d'une position d'un premier élément de coque de pale de rotor d'éolienne (10), dans lequel le premier élément de coque de pale de rotor d'éolienne (10) comporte une section de raccordement (12) et un premier insert (18) comportant une surface de raccordement (20) et agencé dans la section de raccordement (12), le premier insert (18) étant adapté pour être raccordé par vissage à un autre élément d'un rotor d'éolienne, le procédé comprenant les étapes suivantes :
• mise à disposition d'un premier bloc de tension (28) doté d'une surface de contact (34),
• montage du premier bloc de tension (28) sur le premier élément de coque de pale de rotor d'éolienne (10) à l'aide d'un boulon fileté (24) vissé dans le premier insert (18) et précontraint de telle façon que la surface de contact (34) du premier bloc de tension (28) est pressée contre la surface de raccordement (20) du premier insert (18) avec une force de précontrainte,
• application d'une force de manipulation latérale au premier bloc de tension (28),
• dans lequel la force de précontrainte est sélectionnée de manière à obtenir, entre la surface de raccordement (20) du premier insert (18) et la surface de contact (34) du premier bloc de tension (28), un ajustement par interférence suffisamment fort pour transférer la force de manipulation latérale au premier élément de coque de pale de rotor d'éolienne (10).

2. Procédé selon la revendication 1 pour la manipulation d'une forme et/ou d'une position d'un premier élément de coque de pale de rotor d'éolienne (10) en référence à un deuxième élément de coque de pale de rotor d'éolienne (46), dans lequel le deuxième élément de coque de pale de rotor d'éolienne (46) comporte une section de raccordement (12) et un deuxième insert (48) comportant une surface de raccordement (34) et agencé dans la section de raccordement (12), le deuxième insert (48) étant adapté pour être raccordé par vissage audit autre élément de rotor d'éolienne, le procédé comprenant les étapes supplémentaires suivantes :
• mise à disposition d'un deuxième bloc de tension (52) comportant une surface de contact (34),
• montage du deuxième bloc de tension (52) sur le deuxième élément de coque de pale de rotor d'éolienne (46) à l'aide d'un boulon fileté (24) vissé dans le deuxième insert (48) et précontraint de telle façon que la surface de contact (34) du deuxième bloc de tension (52) est pressée contre la surface de raccordement (20) du deuxième insert (48) avec une force de précontrainte,
• application d'une force de manipulation latérale au deuxième bloc de tension (52),
• dans lequel la force de précontrainte appliquée au boulon fileté (24) vissé dans le deuxième insert (48) est sélectionnée de manière à obtenir, entre la surface de raccordement (34) du deuxième insert (48) et le deuxième bloc de tension (52), un ajustement par interférence suffisamment fort pour transférer la force de manipulation latérale appliquée au deuxième bloc de tension (52) au deuxième élément de coque de pale de rotor d'éolienne (46),
• dans lequel les forces de manipulation latérales sont appliquées au moyen d'un élément de tension (38) raccordé au premier bloc de tension (28) et au deuxième bloc de tension (52).

3. Procédé selon la revendication 1 ou 2, dans lequel le boulon fileté (24) vissé dans l'insert (18, 48) respectif présente une précontrainte de conception appliquée lorsque cet insert (18, 48) est raccordé par vissage audit autre élément respectif d'un rotor d'éolienne au moyen du boulon fileté (24), et la force de précontrainte appliquée par le bloc de tension (28, 52) respectif est sélectionnée dans une plage de 50 % à 100 % de la précontrainte de conception.

4. Procédé selon la revendication 2 ou 3, dans lequel le premier élément de coque de pale de rotor d'éolienne (10) et le deuxième élément de coque de pale de rotor d'éolienne (46) comprennent une pluralité d'inserts (18, 48) disposés sur un cercle, et les blocs de tension (28, 52) et l'élément de tension (38) sont agencés de telle façon que les forces de manipulation latérales sont appliquées substantiellement dans une direction radiale par rapport au cercle.

5. Procédé selon l'une quelconque des revendications 2 à 4, dans lequel le procédé est mis en œuvre pour la réparation d'une pale de rotor d'éolienne comprenant le premier élément de coque de pale de rotor d'éolienne (10) et le deuxième élément de coque de pale de rotor d'éolienne (46), dans lequel les forces de manipulation latérales sont appliquées jusqu'à l'obtention d'une position finale avec un alignement correct des deux éléments de coque de pale de rotor d'éolienne (10, 46).

6. Procédé selon la revendication 5 dans lequel les éléments de coque de pale de rotor d'éolienne (10, 46) sont raccordés l'un à l'autre dans la position finale au moyen d'un adhésif.

7. Procédé selon l'une quelconque des revendications 1 à 4, dans lequel le procédé est mis en œuvre pour empêcher une déformation du premier élément de coque de pale de rotor d'éolienne (10) et/ou du deuxième élément de coque de pale de rotor d'éolienne (46), dans lequel la force de manipulation latérale appliquée à l'élément de coque de pale de rotor d'éolienne (10, 46) respectif est appliquée de manière à ce que l'élément de coque de pale de rotor d'éolienne (10, 46) respectif soit maintenu dans une forme souhaitée.

8. Procédé selon l'une quelconque des revendications 1 à 7, dans lequel le premier bloc de tension (28) présente et/ou le deuxième bloc de tension (52) présentent une forme axialement symétrique.

9. Procédé selon l'une quelconque des revendications 1 à 8, dans lequel le premier insert (18) et/ou le deuxième insert (48) est/sont incorporé(s) dans un stratifié (14) de l'élément de coque de pale de rotor d'éolienne (10, 46) respectif.

10. Procédé selon l'une quelconque des revendications 1 à 9, dans lequel le premier bloc de tension (28) et/ou le deuxième bloc de tension (52) est/sont monté(s) sur l'élément de coque de pale de rotor d'éolienne (10, 46) respectif au moyen d'un filetage extérieur (36) du boulon fileté (24) respectif, dans lequel le filetage extérieur (36) est guidé à travers un trou de passage du bloc de tension (28, 52) respectif et fixé à l'aide d'un écrou fileté (66).

11. Procédé selon l'une quelconque des revendications 1 à 9, dans lequel le premier bloc de tension (28) et/ou le deuxième bloc de tension (52) est/sont monté(s) sur l'élément de coque de pale de rotor d'éolienne (10, 46) respectif au moyen d'un filetage extérieur (36) du boulon fileté (24) respectif, dans lequel le filetage extérieur (36) est vissé dans un filetage intérieur (30) du bloc de tension (28, 52) respectif.

12. Procédé selon l'une quelconque des revendications 1 à 10, dans lequel le premier bloc de tension (28) et/ou le deuxième bloc de tension (52) est/sont monté(s) sur l'élément de coque de pale de rotor d'éolienne (10, 46) respectif par au moins un boulon fileté (24) supplémentaire vissé dans un insert supplémentaire de l'élément de coque de pale de rotor d'éolienne (10, 46) respectif.

13. Procédé selon l'une quelconque des revendications 1 à 9, dans lequel le premier bloc de tension (28) et/ou le deuxième bloc de tension (52) et le boulon fileté (24) respectif sont fabriqués en une seule pièce ou assemblés solidement.

14. Procédé selon l'une quelconque des revendications 1 à 13, dans lequel le premier bloc de tension (28) et/ou le deuxième bloc de tension (52) comporte(-nt) une section longitudinale (42) avec une surface extérieure (44) adaptée pour recevoir une section de raccordement de l'élément de tension (38).

15. Procédé selon la revendication 14, dans lequel la surface extérieure (44) est montée de façon rotative sur le bloc de tension (28, 52) respectif.
